# EUROPEAN PATENT APPLICATION

(11) **EP 4 498 248 A1**
(43) Date of publication of application: **29.01.2025**
(21) Application number: 23213262.1
(22) Date of filing: 30.11.2023
(51) Int. Cl.: G06F 9/54, G06F 1/3203, G06F 1/3206, G06F 1/3234, G06F 1/3287, H04L 12/40, H04L 67/12, H04W 52/02

(54) **ACTION EXECUTION METHOD AND APPARATUS, DISTANCE DETERMINATION METHOD AND APPARATUS, DEVICE, AND STORAGE MEDIUM**

(30) Priority: 27.07.2023 CN 202310937660
(71) Applicant: Chongqing Changan Automobile Co., Ltd., Chongqing 400023 (CN)
(72) Inventor: Yang, Bin, Chongqing 400023 (CN); Sun, Liang, Chongqing 400023 (CN); Yuan, Ye, Chongqing 400023 (CN); Qu, Xiansheng, Chongqing 400023 (CN); Yang, Tengyu, Chongqing 400023 (CN)
(74) Representative: Patentanwaltskanzlei Matschnig & Forsthuber OG

(57) **Abstract**

A vehicle sleep and wake-up method apparatus, a vehicle, and a storage medium are disclosed. The method includes: receiving a work group request in response to triggering for a function scenario, where the work group request includes a work group identifier, an execution instruction, and a runtime; querying a remaining duration of a target work group corresponding to the work group identifier; generating execution data according to the execution instruction, the runtime, and the remaining duration; determining a first target control unit from a work group configuration table according to the work group identifier; and executing the execution data on the first target control unit. By decoupling wake-up function software in a vehicle from underlying hardware and a network architecture thereof to stop strong dependence, the reuse rate of the software is improved, wake-up is more accurate, and battery management of the vehicle is facilitated.

## Description

### Field of the Invention

The present disclosure relates to the field of vehicle sleep and wake-up technologies, and in particular, to a vehicle sleep and wake-up method and apparatus, a vehicle, and a storage medium.

### Background of the Invention

At present, in the field of vehicle sleep or wake-up, an upper-layer application mainly sends a network management message of a CAN (controller area network) bus for wake-up or sleep management. The message is defined by statistics on working states of sensors, controllers, and actuators under all vehicle power-off conditions based on functional requirements, and then network management grouping rules are defined. The current solution has many disadvantages: first, the upper-layer application is severely coupled with a CAN network architecture of a specific vehicle model, and parameters of the network management message need to be changed in different vehicle models in the same function scenario, so that the upper-layer application has to re-implement functions; second, each function scenario must clearly define all involved sensors, controllers, and actuators, and as the functions involved in new intelligent vehicles increase, their configuration and management become increasingly difficult and are not conducive to function iteration; and third, the solution is developed for a CAN bus network and is difficult to use in other vehicle communication network protocols, so the solution is low in reuse rate and not conducive to battery management of vehicles.

### Summary of the Invention

One of the objectives of the present disclosure is to provide a vehicle sleep and wake-up method to solve the problem of strong correlation between functional software and underlying hardware and network structures in the prior art; the second objective is to provide a vehicle sleep and wake-up apparatus; the third objective is to provide a vehicle; and the fourth objective is to provide a computer-readable storage medium.

In order to achieve the above objectives, the technical solutions adopted by the present disclosure are as follows:
A vehicle sleep and wake-up method applied to an in-vehicle terminal, where the in-vehicle terminal stores a work group configuration table sent by a cloud, and the method includes:
receiving a work group request in response to triggering for a function scenario, where the work group request includes a work group identifier, an execution instruction, and a runtime;
querying a remaining duration of a target work group corresponding to the work group identifier;
generating execution data according to the execution instruction, the runtime, and the remaining duration;
determining a first target control unit from the work group configuration table according to the work group identifier; and
executing the execution data on the first target control unit.

Further, after the step of executing the execution data on the first target control unit, the method further includes:
generating execution result information; and
broadcasting the execution result information.

Further, the step of generating execution data according to the execution instruction, the runtime, and the remaining duration includes:
combining the runtime and the remaining duration to generate the execution data according to the execution instruction when the vehicle switches from a sleep state to a wake-up state, where the execution data are used for waking up the vehicle; and
monitoring working states corresponding to work groups of the vehicle and controlling the work groups of the vehicle to sleep when the vehicle switches from the wake-up state to the sleep state.

Further, when the function scenario is a scenario of first entering a work group, the state corresponding to the execution instruction is an entry state, and the step of combining the runtime and the remaining duration to generate the execution data according to the execution instruction includes:
determining, in the entry state, whether the remaining duration is zero;
setting the runtime to the remaining duration to generate the execution data when the remaining duration is not zero; and
setting the runtime to the remaining duration and waking up the first target control unit to generate the execution data when the remaining duration is zero.

Further, when the function scenario is a scenario of subsequently entering a work group, the state corresponding to the execution instruction is an entry state, and the step of combining the runtime and the remaining duration to generate the execution data according to the execution instruction includes:
superimposing the runtime on the remaining duration in the entry state to update the remaining duration; and determining the updated remaining duration as the execution data.

Further, when the function scenario is a scenario of holding a work group, the state corresponding to the execution instruction is a hold state, and the step of combining the runtime and the remaining duration to generate the execution data according to the execution instruction includes:
determining, in the hold state, whether the remaining duration is zero;
using execution suspension information as the execution data when the remaining duration is zero; and
superimposing the runtime on the remaining duration to update the remaining duration when the remaining duration is not zero; and determining the updated remaining duration as the execution data.

Further, when the function scenario is a function completion scenario, the state corresponding to the execution instruction is an exit state, the runtime is zero, and the step of combining the runtime and the remaining duration to generate the execution data according to the execution instruction includes:
determining, in the exit state, whether the remaining duration is greater than a preset time threshold;
setting the remaining duration to a duration corresponding to the preset time threshold and determining the updated remaining duration as the execution data when the remaining duration is greater than the preset time threshold; and
keeping the remaining duration as the execution data when the remaining duration is not greater than the preset time threshold.

Further, the step of monitoring working states corresponding to work groups of the vehicle and controlling the work groups of the vehicle to sleep includes:
determining a second target control unit corresponding to a work group according to the work group configuration table when it is detected that the remaining duration of the work group is zero;
determining whether there is a sleep conflict in the second target control unit;
putting the second target control unit to sleep when there is no sleep conflict in the second target control unit;
generating first sleep result information according to the sleep state of the second target control unit; and
broadcasting the first sleep result information.

Further, the step of monitoring working states corresponding to work groups of the vehicle and controlling the work groups of the vehicle to sleep further includes:
determining a third target control unit according to the work group configuration table when it is detected that the remaining durations of all the work groups are zero;
preliminarily putting the third target control unit to sleep, so that the vehicle enters shallow sleep;
generating second sleep result information according to the sleep state of the third target control unit; and
broadcasting the second sleep result information.

Further, the step of monitoring working states corresponding to work groups of the vehicle and controlling the work groups of the vehicle to sleep further includes:
detecting a sleep time of the shallow sleep; and
putting the third target control unit to deep sleep when the sleep time is greater than a preset sleep threshold, so that the vehicle enters full sleep.

Further, the cloud is configured to perform the following steps:
receiving a work group creation instruction, where the work group creation instruction includes grouping conditions and function identifiers;
grouping control units of the in-vehicle terminal according to the grouping conditions to obtain work groups;
associating the work groups with the function identifiers to generate the work group configuration table; and
sending the work group configuration table to the in-vehicle terminal.

Further, the cloud is further configured to perform the following steps:
receiving a modification instruction for the control units of the in-vehicle terminal, where the modification instruction includes control unit modification parameters;
modifying the work group configuration table according to the control unit modification parameters to update the work group configuration table; and
sending the updated work group configuration table to the in-vehicle terminal.

A vehicle sleep and wake-up apparatus applied to an in-vehicle terminal, where the in-vehicle terminal stores a work group configuration table sent by a cloud, and the apparatus includes:
a response module, configured to receive a work group request in response to triggering for a function scenario, where the work group request includes a work group identifier, an execution instruction, and a runtime;
a query module, configured to query a remaining duration of a target work group corresponding to the work group identifier;
an execution data generation module, configured to generate execution data according to the execution instruction, the runtime, and the remaining duration;
a first target control unit determination module, configured to determine a first target control unit from the work group configuration table according to the work group identifier; and
an execution module, configured to execute the execution data on the first target control unit.

A vehicle includes a processor, a memory, and a computer program stored in the memory and executable on the processor, where the computer program, when executed by the processor, implements the steps of the vehicle sleep and wake-up method as described above.

A computer-readable storage medium stores a computer program which, when executed by a processor, implements the steps of the vehicle sleep and wake-up method as described above.

Beneficial effects of the present disclosure are as follows:
(1) In the present disclosure, the corresponding first target control unit is determined based on the work group configuration table for wake-up, so that vehicle wake-up function software is decoupled from underlying hardware and a network architecture thereof, and the vehicle wake-up function software will not be strongly associated with the underlying hardware; different work groups in the work group configuration table can include control units corresponding to different underlying vehicle wake-up function software, thereby improving the reuse rate of the software; and
(2) the execution data are configured based on scenarios to directly wake up the entire work group, different wake-up requirements are met by configuring the execution data, and an in-vehicle communication network is not relied on to send different execution instructions for wake-up, so the present disclosure can be directly transplanted to various different vehicle models, which reduces the time for repeated configuration and management and also facilitates update iterations.

### Brief Description of the Drawings

Fig. 1 is a step flowchart of an embodiment of a vehicle sleep and wake-up method of the present disclosure;
Fig. 2 is a step flowchart of an embodiment of another vehicle sleep and wake-up method of the present disclosure;
Fig. 3 is a schematic diagram of work groups in a work group configuration table of the present disclosure;
Fig. 4 is a schematic diagram of parameters of a work combination request of the present disclosure;
Fig. 5 is a step flowchart of a cloud running process of the present disclosure;
Fig. 6 is a schematic diagram of a work group configuration table of the present disclosure;
Fig. 7 is a schematic diagram of bits in a work group configuration table of the present disclosure;
Fig. 8 is a schematic diagram of an example of a vehicle sleep and wake-up method of the present disclosure;
Fig. 9 is a schematic timing diagram of wake-up in a scenario of first entering a work group according to the present disclosure;
Fig. 10 is a schematic timing diagram of wake-up in a scenario of subsequently entering a work group according to the present disclosure;
Fig. 11 is a schematic timing diagram of wake-up in a scenario of holding a work group according to the present disclosure;
Fig. 12 is a schematic timing diagram of wake-up in a function completion scenario according to the present disclosure;
Fig. 13 is a schematic timing diagram of partial sleep of the present disclosure;
Fig. 14 is a schematic timing diagram of entire vehicle sleep of the present disclosure;
Fig. 15 is a schematic diagram of a sleep relationship of the present disclosure; and
Fig. 16 is a structural block diagram of an embodiment of a vehicle sleep and wake-up apparatus of the present disclosure.

### Detailed Description of the Embodiments

Implementations of the present disclosure will be illustrated below with reference to the accompanying drawings and preferred embodiments. Those skilled in the art can easily understand other advantages and functions of the present disclosure from the disclosure of the specification. The present disclosure may also be implemented or applied through other different specific implementations. Various modifications or changes may be made to the details in the specification based on different viewpoints and applications without departing from the spirit of the present disclosure. It should be understood that the preferred embodiments are only intended to illustrate the present disclosure and not to limit the scope of protection of the present disclosure.

It should be noted that the drawings provided in the following embodiments merely illustrate the basic idea of the present disclosure in a schematic manner, the drawings show only the components related to the present disclosure but are not drawn according to the number, shape and size of the components during actual implementation, the type, quantity and proportion of each component can be changed arbitrarily during actual implementation, and the layout patterns of the components may be more complex.

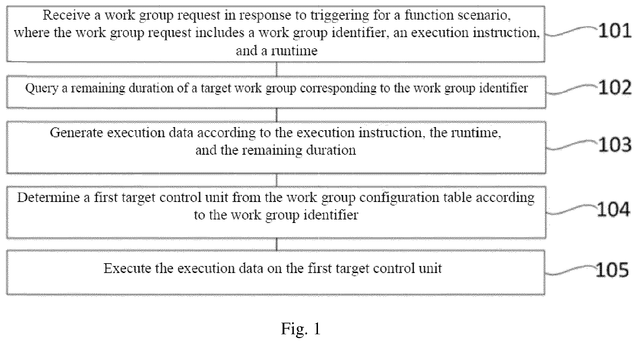

Refer to Fig. 1, which is a step flowchart of an embodiment of a vehicle sleep and wake-up method of the present disclosure. The vehicle sleep and wake-up method is applied to an in-vehicle terminal, the in-vehicle terminal is connected to a cloud, the cloud sends a work group configuration table to the in-vehicle terminal through FBL (Flash BootLoader) or OTA (Over-the-Air Technology), and the in-vehicle terminal stores the work group configuration table. The in-vehicle terminal refers to a vehicle control terminal on a vehicle that controls the operation of the vehicle; and the cloud refers to a cloud data processing terminal connected to the in-vehicle terminal.

The vehicle sleep and wake-up method specifically includes the following steps:
At step 101, a work group request is received in response to triggering for a function scenario, where the work group request includes a work group identifier, an execution instruction, and a runtime.

When a user triggers a relevant function scenario through an operation or a control strategy for vehicle operation, the in-vehicle terminal receives, in response to the trigger for the function scenario, the work group request transmitted by a corresponding component through an SOA (Service-Oriented Architecture) interface when the function scenario is triggered. The work group request includes a work group identifier, an execution instruction, and a runtime. The work group identifier is an identifier corresponding to a work group that needs to be operated on, the execution instruction is an instruction executed for the work group, and the runtime is a duration of the execution instruction. The unit of the duration is not limited.

At step 102, a remaining duration of a target work group corresponding to the work group identifier is queried.

First, the work group corresponding to the work group identifier, namely, the target work group, is determined according to the work group identifier; and then the remaining duration that the target work group currently still keeps running is queried, where the remaining duration may be zero, indicating that the target work group has not been waked up to run.

At step 103, execution data are generated according to the execution instruction, the runtime, and the remaining duration.

An execution state is determined according to the execution instruction, and a corresponding execution time is determined according to the runtime and the remaining duration, so as to generate the execution data.

At step 104, a first target control unit is determined from the work group configuration table according to the work group identifier.

A control unit included in the work group corresponding to the work group identifier, namely, the first target control unit, may further be determined from the work group configuration table according to the work group identifier. The control unit refers to a sensor, a controller, or an actuator on the vehicle that can be waked up/sleep independently. Each control unit should support power management power-on, network or hard wire wake-up, and possible normal or low-power operation modes.

At step 105, the execution data are executed on the first target control unit.

The corresponding execution data are executed on the determined first target control unit, to wake up and run the first target control unit according to the execution data.

In the embodiment of the present disclosure, a work group request is received in response to triggering for a function scenario, where the work group request includes a work group identifier, an execution instruction, and a runtime; a remaining duration of a target work group corresponding to the work group identifier is queried; execution data are generated according to the execution instruction, the runtime, and the remaining duration; a first target control unit is determined from the work group configuration table according to the work group identifier; the execution data are executed on the first target control unit, where the corresponding first target control unit is determined based on the work group configuration table for wake-up, so that vehicle wake-up function software is decoupled from underlying hardware and a network architecture thereof to stop strong association, thereby improving the reuse rate of the software; and the execution data are configured based on scenarios to directly wake up the whole work groups, wake-up requirements are met by configuring the execution data, and an in-vehicle communication network is not relied on to send different execution instructions for wake-up, so the method can be directly transplanted to various different vehicle models, which reduces the time for repeated configuration and management and also facilitates update iterations.

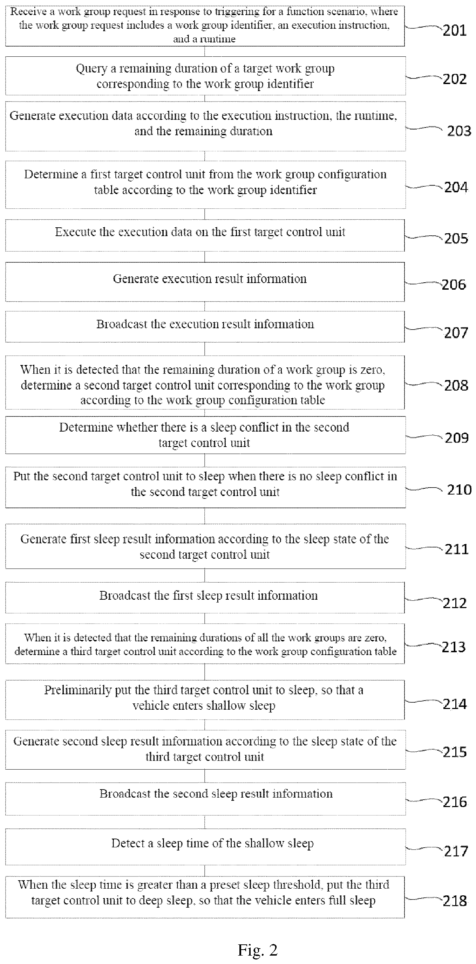

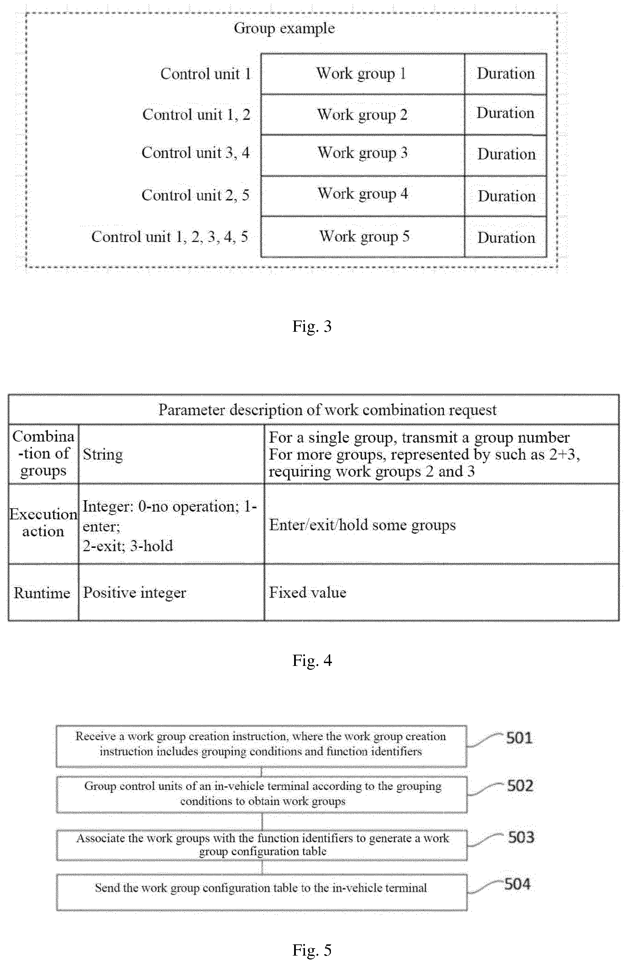

Refer to Fig. 2, which shows a step flowchart of an embodiment of another vehicle sleep and wake-up method of the present disclosure. The vehicle sleep and wake-up method is applied to an in-vehicle terminal, and the in-vehicle terminal stores a work group configuration table sent by a cloud. Work groups in specific content of the work group configuration table may refer to Fig. 3. For example, the work groups are divided into "power, chassis group", "vehicle control group", "cabin and display group", "driving and sensor group", and "air conditioning group" according to functional domain correlations. The work group configuration table records control units corresponding to each work group, and duration of each work group during operation.

The vehicle sleep and wake-up method includes:
At step 201, a work group request is received in response to triggering for a function scenario, where the work group request includes a work group identifier, an execution instruction, and a runtime.

The transmitted work group request is received through an SOA interface in response to the trigger for the function scenario. The work group request includes a work group identifier, an execution instruction, and a runtime. Specifically, with reference to Fig. 4, the work group identifier is a combination of groups, represented in a string form. When the work group is a single group, the work group identifier is only a single group number (string). When there is a plurality of groups, the work group identifier is a combination of a plurality of work group numbers. The execution instruction is an execution action. The execution action includes entry, exit, and hold, which may be represented by integers. For example, 0 represents no operation, 1 represents entry, 2 represents exit, and 3 represents hold. The runtime is running duration represented by a positive integer, is a fixed value, and can be modified as needed.

At step 202, a remaining duration of a target work group corresponding to the work group identifier is queried.

The remaining duration of the target group corresponding to the work group identifier is queried to determine the current running condition of the target work group.

At step 203, execution data are generated according to the execution instruction, the runtime, and the remaining duration.

An execution state is determined according to the execution instruction, and a corresponding execution time is determined according to the runtime and the remaining duration, so as to generate the execution data.

In an optional embodiment of the present disclosure, the step of generating execution data according to the execution instruction, the runtime, and the remaining duration includes:
The runtime and the remaining duration are combined to generate the execution data according to the execution instruction when the vehicle switches from a sleep state to a wake-up state, where the execution data are used for waking up the vehicle;

Working states corresponding to work groups of the vehicle are monitored and the work groups of the vehicle are controlled to sleep when the vehicle switches from the wake-up state to the sleep state.

In the embodiment of the present disclosure, different controls can be performed according to the switching between the sleep and wake-up states of the vehicle. When the vehicle switches from the sleep state to the wake-up state, the runtime and the remaining duration are combined according to the execution instruction to generate the execution data, and the execution data are executed to wake up the vehicle. When the vehicle switches from the wake-up to the sleep mode, the corresponding working states of all work groups of the vehicle may be monitored, and the work groups of the vehicle are controlled based on the corresponding working states to sleep to different degrees.

Specifically, different execution data may be determined based on the execution instruction triggered in different scenarios.

In an optional embodiment of the present disclosure, when the function scenario is a scenario of first entering a work group, the state corresponding to the execution instruction is an entry state, and the step of combining the runtime and the remaining duration according to the execution instruction to generate the execution data includes: whether the remaining duration is zero is determined in the entry state; and the runtime is set to the remaining duration to generate the execution data when the remaining duration is not zero; or the runtime is set to the remaining duration and the first target control unit is waked up to generate the execution data when the remaining duration is zero.

In the scenario of first entering a work group, the execution instruction is entry. As the work group is first entered, the state of the work group needs to be determined first. Therefore, in the entry state, whether the remaining duration of the target work group is zero is determined. When the remaining duration is zero, that is, the target work group is in a sleep state, the first target control unit included in the target work group needs to be waked up, and the runtime is set to the remaining duration as execution data. For the wake-up of the first target control unit, a power-on/off actuator calls a power management service to execute a power-on operation on the corresponding control unit; a network wake-up actuator calls a sleep and wake-up service to execute a wake-up operation on the corresponding control unit; and if the control unit has an ability to finely adjust energy consumption levels, an energy consumption level actuator calls an energy consumption level service to adjust the energy consumption level of the control unit.

When the remaining duration is not zero, that is, the target work group is in a running state, the runtime may be directly set to the remaining duration as execution data, so that the target work group continues to run.

In an optional embodiment of the present disclosure, when the function scenario is a scenario of subsequently entering a work group, the state corresponding to the execution instruction is an entry state, and the step of combining the runtime and the remaining duration according to the execution instruction to generate the execution data includes: the runtime is superposed on the remaining duration in the entry state to update the remaining duration; and the updated remaining duration is determined as the execution data.

When the triggered function scenario is the scenario of subsequently entering a work group, the execution instruction is entry. Due to multiple subsequent entries, the work group is already in a wake-up state and may move directly. The runtime may be superimposed on the current remaining duration in the target work group to obtain a new duration, the remaining duration is updated with the new duration, and the updated remaining duration is used as the execution data to extend the runtime of the first control unit of the target work group.

In an optional embodiment of the present disclosure, when the function scenario is a scenario of holding a work group, the state corresponding to the execution instruction is a hold state, and the step of combining the runtime and the remaining duration according to the execution instruction to generate the execution data includes: whether the remaining duration is zero is determined in the hold state; and execution suspension information is used as the execution data when the remaining duration is zero; or the runtime is superposed on the remaining duration to update the remaining duration when the remaining duration is not zero; and the updated remaining duration is determined as the execution data.

When a function is not completed and needs to hold the work group, the triggered function scenario is the scenario of holding the work group, the execution instruction is the hold state, and whether the remaining duration is zero may be determined in the hold state; and when the remaining duration is zero, that is, the target work group is in an abnormal state, the execution suspension information is used as execution data to suspend the operation of the target work group in subsequent executions; or when the remaining duration is not zero, that is, the target work group is still running, the runtime may be superimposed on the remaining duration to obtain a new duration, the remaining duration is updated with the new duration, and the updated remaining duration is determined as the execution data.

In an optional embodiment of the present disclosure, when the function scenario is a function completion scenario, the state corresponding to the execution instruction is an exit state, the runtime is zero, and the step of combining the runtime and the remaining duration according to the execution instruction to generate the execution data includes: whether the remaining duration is greater than a preset time threshold is determined in the exit state; and the remaining duration is set to a duration corresponding to the preset time threshold and the updated remaining duration is determined as the execution data when the remaining duration is greater than the preset time threshold; or the remaining duration is kept as the execution data when the remaining duration is not greater than the preset time threshold.

When the function is completed, the triggered function scenario is the function completion scenario, and the execution instruction is exit. In this case, whether the remaining duration is greater than the preset time threshold may be determined. The preset time threshold may be set to a duration based on actual needs.

When the remaining duration is greater than the preset time threshold, that is, the target work group still has a long time to end running, the remaining duration may be set to the duration corresponding to the preset time threshold to update the remaining duration, and then the updated remaining duration is used as the execution data. When the remaining duration is not greater than the preset time threshold, that is, the target work group is about to end running, the remaining duration may be kept unchanged as the execution data.

At step 204, a first target control unit is determined from the work group configuration table according to the work group identifier.

In the embodiment of the present disclosure, the first target control unit included in the work group corresponding to the work group identifier is determined from the work group configuration table according to the work group identifier.

It should be noted that the first target control unit and the subsequent second target control unit and third target control unit are all control units on the vehicle and may be the same control unit. The first, the second, and the like are merely for distinguishing control units in different scenarios and do not limit the division of control units.

At step 205, the execution data are executed on the first target control unit.

The obtained execution data are executed on the first target control unit, so that the first target control unit implements the corresponding function.

At step 206, execution result information is generated.

The execution result information is generated based on the execution condition of the first target control unit.

At step 207, the execution result information is broadcast.

The execution result information after each execution is broadcast to the outside and synchronously fed back to the triggered function scenario.

At step 208, when it is detected that the remaining duration of a work group is zero, a second target control unit corresponding to the work group is determined according to the work group configuration table.

The in-vehicle terminal may periodically detect the remaining duration of each work group. When it is detected that the remaining duration of a work group is zero, whether the work group needs to sleep may be determined. The second target control unit corresponding to the work group and its corresponding sleep mode may be determined according to the work group configuration table. Whether the work group may sleep is determined by the control unit.

At step 209, whether there is a sleep conflict in the second target control unit is determined.

Whether there is a sleep conflict in the second target control unit may be determined to determine whether the control unit overlaps with other work groups and identify sleep conflicts between groups.

At step 210, the second target control unit is put to sleep when there is no sleep conflict in the second target control unit.

When there is no sleep conflict in the second target control unit, the second target control unit of the work group may be put to sleep, so that the vehicle enters a partial sleep state.

At step 211, first sleep result information is generated according to the sleep state of the second target control unit.

A result of sleep execution is determined according to the sleep state of the second target control unit to generate the first sleep result information.

At step 212, the first sleep result information is broadcast.

The first sleep result information is broadcast to the outside through an event, and the second target control unit sleeps and waits for next execution.

At step 213, when it is detected that the remaining durations of all the work groups are zero, a third target control unit is determined according to the work group configuration table.

The in-vehicle terminal continuously and periodically detects the work groups. When it is detected that the remaining durations of all the work groups are zero, that is, all the work groups have entered partial sleep, the third target control unit and its corresponding sleep mode may be determined according to the work group configuration table.

At step 214, the third target control unit is preliminarily put to sleep, so that the vehicle enters shallow sleep.

The third target control unit is preliminarily put to sleep, so that the entire vehicle enters shallow sleep.

At step 215, second sleep result information is generated according to the sleep state of the third target control unit.

A result of sleep execution is determined according to the sleep state of the third target control unit to generate the second sleep result information.

At step 216, the second sleep result information is broadcast.

The second sleep result information is broadcast to the outside through time.

At step 217, a sleep time of the shallow sleep is detected.

After the vehicle enters the shallow sleep, the sleep time of the shallow sleep, namely, a time without any wake-up operation, may be continuously detected.

At step 218, when the sleep time is greater than a preset sleep threshold, the third target control unit is put to deep sleep, so that the vehicle enters full sleep.

When the sleep time is greater than the preset sleep threshold, that is, the sleep time has exceeded a duration, the third target control unit may be controlled to enter deep sleep, so that the vehicle enters full sleep.

Further, with reference to Fig. 5, the cloud is configured to perform the following steps:

At step 501, a work group creation instruction is received, where the work group creation instruction includes grouping conditions and function identifiers;

The cloud maintains and creates the work group configuration table, and may receive the work group creation instruction. The work group creation instruction includes grouping conditions and function identifiers, where the grouping conditions are determined by an exhaustible dimension, that is, groups are divided by a dimension, the dimension can fully cover all control units and clearly divide a plurality of stable groups, and the dimension includes, but is not limited to, a controller quantity dimension, a power increment dimension, and a module domain division dimension. For example, the groups are divided into "power, chassis group", "vehicle control group", "cabin and display group", "driving and sensor group", and "air conditioning group" according to functional domain correlations. The function identifiers are identifier strings of corresponding functions.

At step 502, control units of the in-vehicle terminal are grouped according to the grouping conditions to obtain work groups;

All control units in the in-vehicle terminal are divided into a plurality of different work groups based on the grouping condition, where the control units in the work groups may be repeated.

At step 503, the work groups are associated with the function identifiers to generate the work group configuration table;

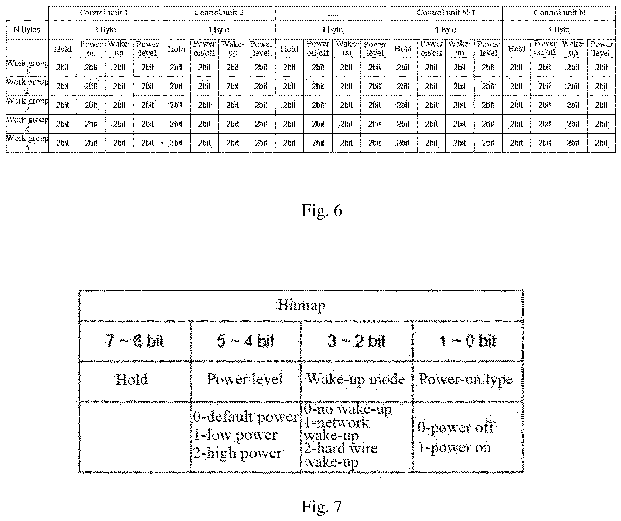

The work groups are associated with the function identifiers. As shown in Fig. 6, each control unit of each group occupies a Byte to store information such as "power-on type", "wake-up mode", and "power level". Power-on type: 0-power off; 1-power on. Wake-up mode: 0-no wake-up; 1-network wake-up; 2-hard wire wake-up. Power level: 0-default power; 1-low power; 2-high power. Different values are configured based on the grouping conditions. In each row (namely, a specific group), it should be clear whether power is required, which mode the power is on, whether wake-up is required, which mode the wake-up is done, and the like. The work group configuration table is generated.

Moreover, in order to save the storage space of the work group configuration table, with reference to Fig. 7, the work group configuration table may be encoded and stored in bits, where high 2bits, namely,7-6bits represents hold, 5-4bits represents power level, 3-2bits represents wake-up mode, and 1-Obit represents power-on type.

At step 504, the work group configuration table is sent to the in-vehicle terminal.

The work group configuration table is then sent to the in-vehicle terminal through FBL or OTA, and the in-vehicle terminal receives and stores the work group configuration table and performs relevant processing according to the work group configuration table. The processing of the in-vehicle terminal may refer to the foregoing embodiments and will not be elaborated.

Further, the cloud is further configured to perform the following steps:
At step S1, a modification instruction for the control units of the in-vehicle terminal is received, where the modification instruction includes control unit modification parameters;

When the work group configuration table needs to be maintained such as modified, the modification instruction for the control units of the in-vehicle terminal may be sent to the cloud, and the cloud receives the modification instruction for the control units of the in-vehicle terminal. The modification instruction includes control unit modification parameters, including at least one of the "power-on type", "wake-up mode", and "power level" information that needs to be modified.

At step S2, the work group configuration table is modified according to the control unit modification parameters to update the work group configuration table;

Corresponding control unit information in the work group configuration table is modified according to the control unit modification parameters to update the work group configuration table.

At step S3, the updated work group configuration table is sent to the in-vehicle terminal.

The updated work group configuration table is sent to the in-vehicle terminal, so that the in-vehicle terminal can update the work group configuration table in a timely manner.

In the embodiment of the present disclosure, the corresponding first target control unit is determined based on the work group configuration table for wake-up, so that vehicle wake-up function software is decoupled from underlying hardware and a network architecture thereof to stop strong association, thereby improving the reuse rate of the software; the execution data are configured based on scenarios to directly wake up the whole work groups, wake-up requirements are met by configuring the execution data, and an in-vehicle communication network is not relied on to send different execution instructions for wake-up, so the method can be directly transplanted to various different vehicle models, which reduces the time for repeated configuration and management and also facilitates update iterations; and sleep management is implemented by self-detection layer by layer, and the control units in the vehicle are gradually powered off, thereby solving complex relationships such as sequence in power-off scenarios, reducing the occurrence of feeding, and reducing the probability of feeding.

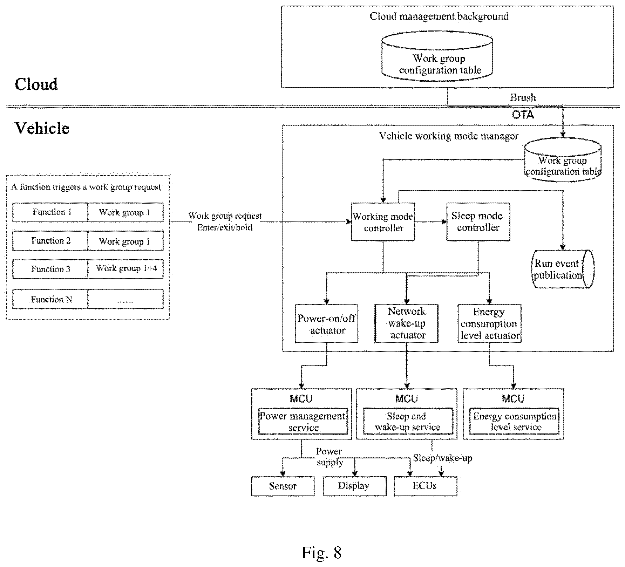

In order to enable those skilled in the art to have a clearer understanding of the implementation process of the present disclosure, the following example is provided to illustrate the implementation process of the present disclosure:
Refer to Fig. 8, which is a schematic diagram of an example of a vehicle sleep and wake-up method of the present disclosure. The cloud is mainly responsible for editing and maintaining the work group configuration table, and transmitting the work group configuration table to a vehicle end (namely, the in-vehicle terminal) through FBL or OTA. The in-vehicle terminal may serve as a vehicle working mode manager, provide a wake-up service to the outside, and perform sleep management through software logic.

The vehicle working mode manager includes two controllers with opposite functions: a working mode controller and a sleep mode controller.
1. Main responsibilities of the working mode controller are as follows:
   a. Maintain the current working mode of the entire vehicle from "sleep" to "normal work";
   b. Maintain the duration of each group and process timeout;
   c. Receive work group requests from external functions, recognize conflicts, and arbitrate execution;
   d. Read configuration information and hand over a wake-up function to various actuators (a power-on/off actuator, a network wake-up actuator, and an energy consumption level actuator) for sequential execution;
   e. Simultaneously broadcast execution states to the outside through events.
2. Main responsibilities of the sleep mode controller are as follows:
   a. Based on the state of each work group, actuate the entire vehicle to enter a sleep mode, that is, to develop from "normal work" to "sleep";
   b. Based on the sleep situation, switch among "shallow sleep-deep sleep-complete power outage".
3. The actuators (the power-on/off actuator, the network wake-up actuator, and the energy consumption level actuator) call SOA service interfaces on an in-vehicle Ethernet to implement specific functions.

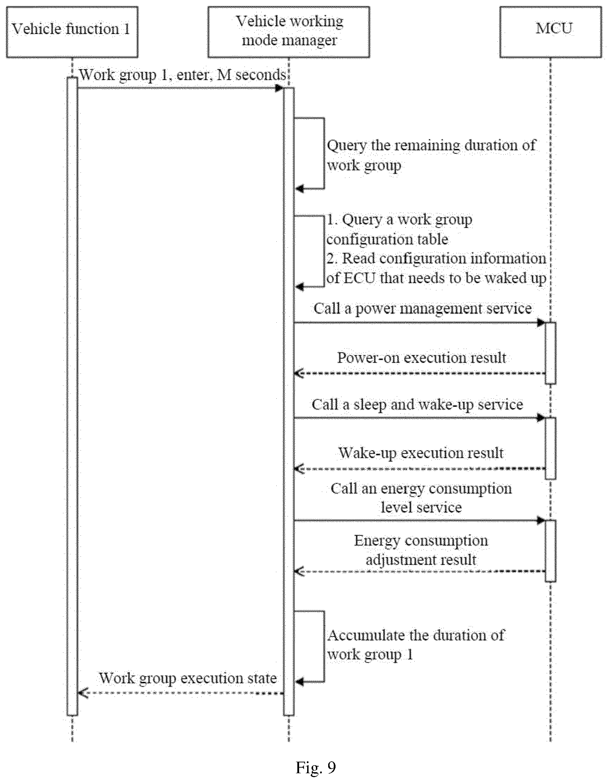

Hereinafter, specific scenario trigger will be explained:
A scenario of first entering a work group is as shown in Fig. 9. A function scenario triggers a work group request (work group request parameters include: work group 1, enter, M seconds), and the work group request is transmitted to the vehicle working mode manager through an SOA service interface. The working mode controller first queries the remaining duration of the group. If the remaining duration is zero, it indicates that the work group has not entered a working state and needs to be waked up. Next, the vehicle work group configuration table is read to search a control unit that needs to be waked up. Then, the power-on/off actuator calls a power management service to execute a power-on operation on the corresponding control unit; the network wake-up actuator calls a sleep and wake-up service to execute a wake-up operation on the corresponding control unit; and if the control unit has an ability to finely adjust energy consumption levels, the energy consumption level actuator calls an energy consumption level service to adjust the energy consumption level of the control unit. After the above operations are completed, the working mode controller sets the remaining duration of the work group to M seconds. Finally, the execution result is broadcast to the outside through an event and synchronously fed back to the function scenario.

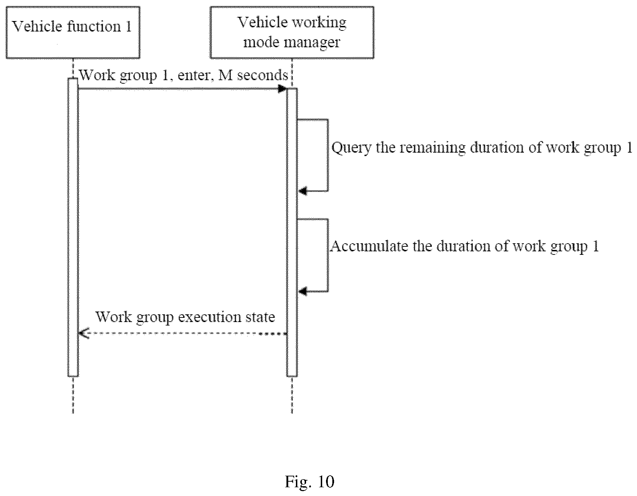

When other function scenarios require entering the same work group subsequently, the situation is as shown in Fig. 10. A function scenario triggers a work group request (parameters: work group 1, enter, M seconds), and the work group request is transmitted to the vehicle working mode manager through an SOA service interface. The working mode controller first queries the remaining duration of the group. If the remaining duration is not zero, it indicates that the work group has entered a working state and does not need to be waked up. The working mode controller accumulates the remaining duration of the work group by M seconds. Finally, the execution result is broadcast to the outside through an event and synchronously fed back to the function scenario.

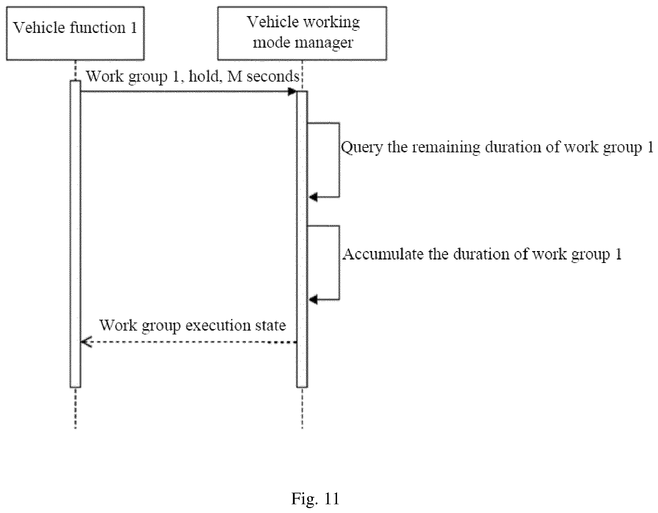

When the same function scenario needs to maintain the working state of the required work group due to the incomplete function, the situation is as shown in Fig. 11. The current function scenario triggers a work group request (parameter work group 1, hold, M seconds), and the work group request is transmitted to the vehicle working mode manager through an SOA service interface. The working mode controller first queries the remaining duration of the group. If the remaining duration is zero, an exception occurs and execution is interrupted; or if the remaining duration is not zero, it indicates that the work group has entered a working state, and the working mode controller accumulates the remaining duration of the work group by M seconds. Finally, the execution result is broadcast to the outside through an event and synchronously fed back to the function scenario.

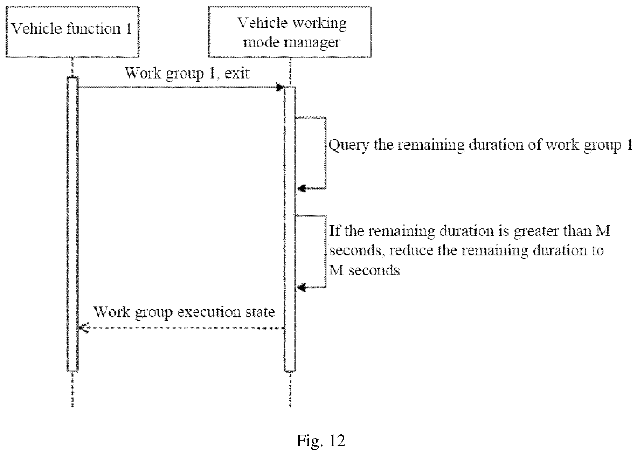

When a function scenario needs to declare that the working state of the required work group will not be maintained due to the completion of the function, the situation is as shown in Fig. 12. The current function scenario triggers a work group request (parameter work group 1, exit), and the work group request is transmitted to the vehicle working mode manager through an SOA service interface. The working mode controller first queries the remaining duration of the group. If the remaining duration is less than or equal to M seconds, the remaining time of the work group remains unchanged; or if the remaining duration is greater than M, the remaining duration of the work group is set to M seconds. That is, when the working mode controller allocates a time slice to any work group, the time slice does not exceed M seconds. Combined with the "hold" operation, the function scenario is required to continue the operation within M seconds. Finally, the execution result is broadcast to the outside through an event and synchronously fed back to the function scenario.

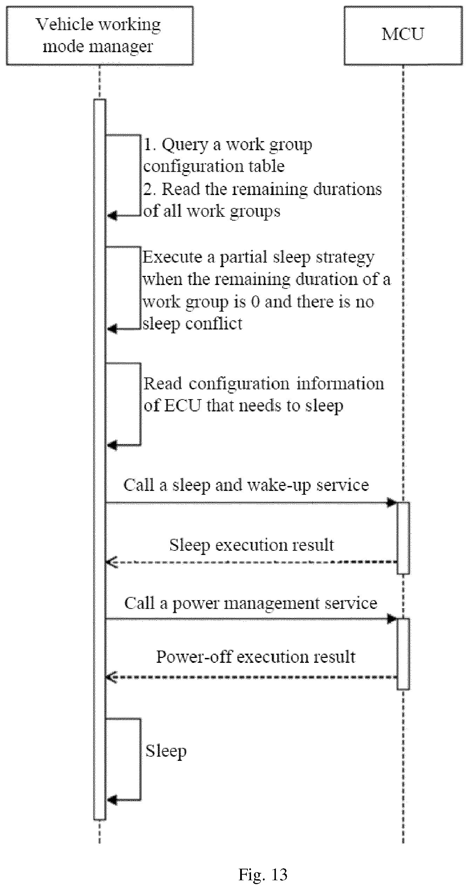

Moreover, the sleep of the vehicle may be controlled. The sleep process will be explained as follows:
As shown in Fig. 13, the sleep mode controller periodically checks the remaining durations of all work groups. When it is detected that the remaining duration of a work group is zero, the sleep mode controller reads the content of the work group configuration table. Sleep conflicts between groups are recognized based on whether the control unit overlaps with other work groups. If no sleep conflict is found, a partial sleep strategy is executed. The network wake-up actuator calls a sleep wake-up service to execute a sleep operation on the corresponding control unit; and then the power-on/off actuator calls a power management service to execute a power-off operation on the corresponding control unit. Finally, the sleep result is broadcast to the outside through an event. The control unit sleeps and waits for next execution.

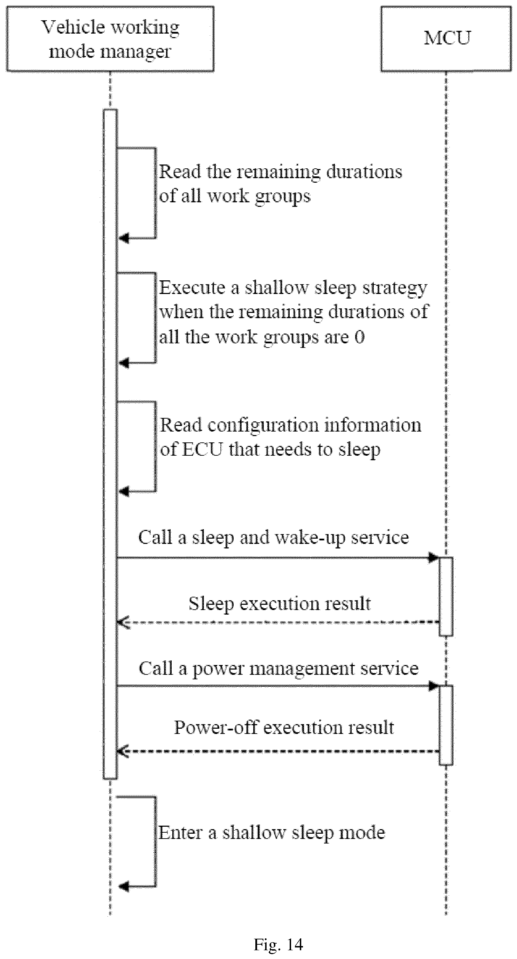

As shown in Fig. 14, the sleep mode controller periodically checks the remaining durations of all work groups. When it is detected that the remaining durations of all work groups are zero, the sleep mode controller reads the content of the work group configuration table. The network wake-up actuator calls a sleep wake-up service to execute a sleep operation on the corresponding control unit; and then the power-on/off actuator calls a power management service to execute a power-off operation on the corresponding control unit. Finally, the sleep result is broadcast to the outside through an event. The entire vehicle enters a shallow sleep mode.

When the entire vehicle enters the shallow sleep mode for N hours without any wake-up operation, it is considered as a condition for entering a deep sleep mode. The state of the vehicle working mode manager is adjusted to the deep sleep mode. When the entire vehicle enters the deep sleep mode for M hours without any wake-up operation, it is considered as a condition for entering a full sleep mode. The state of the vehicle working mode manager is adjusted to the full sleep mode. The shallow sleep mode and the deep sleep mode here are also work groups, but special work groups only allow special function scenario calls.

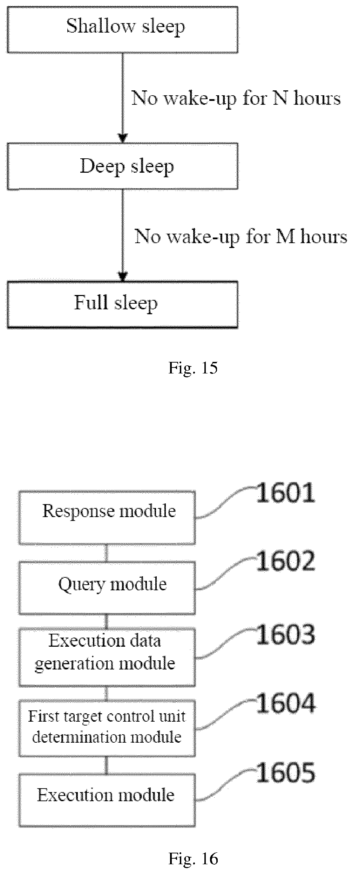

Based on the above sleep process, it can be seen that the sleep process of the entire vehicle with reference to Fig. 15 is a layer-by-layer sleep process. The control units in some work groups first sleep, and then the entire vehicle enters shallow sleep and finally enters deep sleep, so that timing control on the control units does not need to be concerned during sleep.

Refer to Fig. 16, which is a structural block diagram of an embodiment of a vehicle sleep and wake-up apparatus of the present disclosure. The vehicle sleep and wake-up apparatus is applied to an in-vehicle terminal, the in-vehicle terminal stores a work group configuration table sent by a cloud, and the apparatus specifically includes the following modules:
a response module 1601, configured to receive a work group request in response to triggering for a function scenario, where the work group request includes a work group identifier, an execution instruction, and a runtime;
a query module 1602, configured to query a remaining duration of a target work group corresponding to the work group identifier;
an execution data generation module 1603, configured to generate execution data according to the execution instruction, the runtime, and the remaining duration;
a first target control unit determination module 1604, configured to determine a first target control unit from the work group configuration table according to the work group identifier; and
an execution module 1605, configured to execute the execution data on the first target control unit.

In an optional embodiment of the present disclosure, the apparatus further includes:
an execution result information generation module, configured to generate execution result information; and
a first broadcasting module, configured to broadcast the execution result information.

In an optional embodiment of the present disclosure, the execution data generation module 1603 includes:
an execution data generation submodule, configured to combine the runtime and the remaining duration are combined to generate the execution data according to the execution instruction when the vehicle switches from a sleep state to a wake-up state, where the execution data are used for waking up the vehicle; and
a sleep control submodule, configured to monitor working states corresponding to work groups of the vehicle and control the work groups of the vehicle to sleep when the vehicle switches from the wake-up state to the sleep state.

In an optional embodiment of the present disclosure, when the function scenario is a scenario of first entering a work group, the state corresponding to the execution instruction is an entry state, and the execution data generation submodule includes:
a first determination unit, configured to determine, in the entry state, whether the remaining duration is zero;
a first calculation unit, configured to set the runtime to the remaining duration to generate the execution data when the remaining duration is not zero; and
a second calculation unit, configured to set the runtime to the remaining duration and wake up the first target control unit to generate the execution data when the remaining duration is zero.

In an optional embodiment of the present disclosure, when the function scenario is a scenario of subsequently entering a work group, the state corresponding to the execution instruction is an entry state, and the execution data generation submodule includes:
a third calculation unit, configured to superimpose the runtime on the remaining duration in the entry state to update the remaining duration; and determine the updated remaining duration as the execution data.

In an optional embodiment of the present disclosure, when the function scenario is a scenario of holding a work group, the state corresponding to the execution instruction is a hold state, and the execution data generation submodule includes:
a second determination unit, configured to determine, in the hold state, whether the remaining duration is zero;
a fourth calculation unit, configured to use execution suspension information as the execution data when the remaining duration is zero; and
a fifth calculation unit, configured to superimpose the runtime on the remaining duration to update the remaining duration when the remaining duration is not zero; and determine the updated remaining duration as the execution data.

In an optional embodiment of the present disclosure, when the function scenario is a function completion scenario, the state corresponding to the execution instruction is an exit state, the runtime is zero, and the execution data generation submodule includes:
a third determination unit, configured to determine, in the exit state, whether the remaining duration is greater than a preset time threshold;
a sixth calculation unit, configured to set the remaining duration to a duration corresponding to the preset time threshold and determine the updated remaining duration as the execution data when the remaining duration is greater than the preset time threshold; and
a seventh calculation unit, configured to keep the remaining duration as the execution data when the remaining duration is not greater than the preset time threshold.

In an optional embodiment of the present disclosure, the sleep control submodule includes:
a first detection unit, configured to determine a second target control unit corresponding to a work group according to the work group configuration table when it is detected that the remaining duration of the work group is zero;
a sleep conflict determination unit, configured to determine whether there is a sleep conflict in the second target control unit;
a first sleep unit, configured to put the second target control unit to sleep when there is no sleep conflict in the second target control unit;
a first sleep result information generation unit, configured to generate first sleep result information according to the sleep state of the second target control unit; and
a second broadcasting unit, configured to broadcast the first sleep result information.

In an optional embodiment of the present disclosure, the apparatus further includes:
a second detection unit, configured to determine a third target control unit according to the work group configuration table when it is detected that the remaining durations of all the work groups are zero;
a second sleep unit, configured to preliminarily put the third target control unit to sleep, so that the vehicle enters shallow sleep;
a second sleep result information generation unit, configured to generate second sleep result information according to the sleep state of the third target control unit; and
a third broadcasting unit, configured to broadcast the second sleep result information.

In an optional embodiment of the present disclosure, the apparatus further includes:
a third detection unit, configured to detect a sleep time of the shallow sleep; and
a third sleep unit, configured to put the third target control unit to deep sleep when the sleep time is greater than a preset sleep threshold, so that the vehicle enters full sleep.

In an optional embodiment of the present disclosure, the cloud is configured to perform the following steps:
a work group creation instruction is received, where the work group creation instruction includes grouping conditions and function identifiers;
control units of the in-vehicle terminal are grouped according to the grouping conditions to obtain work groups;
the work groups are associated with the function identifiers to generate the work group configuration table; and
the work group configuration table is sent to the in-vehicle terminal.

In an optional embodiment of the present disclosure, the cloud is further configured to perform the following steps:
a modification instruction for the control units of the in-vehicle terminal is received, where the modification instruction includes control unit modification parameters;
the work group configuration table is modified according to the control unit modification parameters to update the work group configuration table; and
the updated work group configuration table is sent to the in-vehicle terminal.

The apparatus embodiment is substantially similar to the method embodiment, and therefore is described briefly. For related information, refer to descriptions of the related parts in the method embodiment.

An embodiment of the present disclosure further provides a vehicle, including:
a processor and a storage medium, where the storage medium stores a computer program executable by the processor, and when the vehicle is running, the processor executes the computer program to perform the vehicle sleep and wake-up method as described in any of the embodiments of the present disclosure. The vehicle sleep and wake-up method is applied to an in-vehicle terminal, the in-vehicle terminal stores a work group configuration table sent by a cloud, and the method includes:
a work group request is received in response to triggering for a function scenario, where the work group request includes a work group identifier, an execution instruction, and a runtime;
a remaining duration of a target work group corresponding to the work group identifier is queried;
execution data are generated according to the execution instruction, the runtime, and the remaining duration;
a first target control unit is determined from the work group configuration table according to the work group identifier; and
the execution data are executed on the first target control unit.

Further, after the step that the execution data are executed on the first target control unit, the method further includes:
execution result information is generated; and
the execution result information is broadcast.

Further, the step that execution data are generated according to the execution instruction, the runtime, and the remaining duration includes:
the runtime and the remaining duration are combined to generate the execution data according to the execution instruction when the vehicle switches from a sleep state to a wake-up state, where the execution data are used for waking up the vehicle; and
working states corresponding to work groups of the vehicle are monitored and the work groups of the vehicle are controlled to sleep when the vehicle switches from the wake-up state to the sleep state.

Further, when the function scenario is a scenario of first entering a work group, the state corresponding to the execution instruction is an entry state, and the step that the runtime and the remaining duration are combined to generate the execution data according to the execution instruction includes:
whether the remaining duration is zero is determined in the entry state;
the runtime is set to the remaining duration to generate the execution data when the remaining duration is not zero; and
the runtime is set to the remaining duration and the first target control unit is waked up to generate the execution data when the remaining duration is zero.

Further, when the function scenario is a scenario of subsequently entering a work group, the state corresponding to the execution instruction is an entry state, and the step that the runtime and the remaining duration are combined to generate the execution data according to the execution instruction includes:
the runtime is superimposed on the remaining duration in the entry state to update the remaining duration; and the updated remaining duration is determined as the execution data.

Further, when the function scenario is a scenario of holding a work group, the state corresponding to the execution instruction is a hold state, and the step that the runtime and the remaining duration are combined to generate the execution data according to the execution instruction includes:
whether the remaining duration is zero is determined in the hold state;
execution suspension information is used as the execution data when the remaining duration is zero; and
the runtime is superimposed on the remaining duration to update the remaining duration when the remaining duration is not zero; and the updated remaining duration is determined as the execution data.

Further, when the function scenario is a function completion scenario, the state corresponding to the execution instruction is an exit state, the runtime is zero, and the step that the runtime and the remaining duration are combined to generate the execution data according to the execution instruction includes:
whether the remaining duration is greater than a preset time threshold is determined in the exit state;
the remaining duration is set to a duration corresponding to the preset time threshold and the updated remaining duration is determined as the execution data when the remaining duration is greater than the preset time threshold; and
the remaining duration is kept as the execution data when the remaining duration is not greater than the preset time threshold.

Further, the step that working states corresponding to work groups of the vehicle are monitored and the work groups of the vehicle are controlled to sleep includes:
a second target control unit corresponding to a work group is determined according to the work group configuration table when it is detected that the remaining duration of the work group is zero; and
whether there is a sleep conflict in the second target control unit is determined;
the second target control unit is put to sleep when there is no sleep conflict in the second target control unit;
first sleep result information is generated according to the sleep state of the second target control unit; and
the first sleep result information is broadcast.

Further, the step that working states corresponding to work groups of the vehicle are monitored and the work groups of the vehicle are controlled to sleep further includes:
a third target control unit is determined according to the work group configuration table when it is detected that the remaining durations of all the work groups are zero;
the third target control unit is preliminarily put to sleep, so that the vehicle enters shallow sleep;
second sleep result information is generated according to the sleep state of the third target control unit; and
the second sleep result information is broadcast.

Further, the step that working states corresponding to work groups of the vehicle are monitored and the work groups of the vehicle are controlled to sleep further includes:
a sleep time of the shallow sleep is detected; and
the third target control unit is put to deep sleep when the sleep time is greater than a preset sleep threshold, so that the vehicle enters full sleep.

Further, the cloud is configured to perform the following steps:
a work group creation instruction is received, where the work group creation instruction includes grouping conditions and function identifiers;
control units of the in-vehicle terminal are grouped according to the grouping conditions to obtain work groups;
the work groups are associated with the function identifiers to generate the work group configuration table; and
the work group configuration table is sent to the in-vehicle terminal.

Further, the cloud is further configured to perform the following steps:
a modification instruction for the control units of the in-vehicle terminal is received, where the modification instruction includes control unit modification parameters;
the work group configuration table is modified according to the control unit modification parameters to update the work group configuration table; and
the updated work group configuration table is sent to the in-vehicle terminal.

The memory may include a random access memory (RAM) or non-volatile memory, such as at least one disk storage. Optionally, the memory may alternatively be at least one storage apparatus away from the foregoing processor.

The processor may be a general-purpose processor, including a central processing unit (CPU), a network processor (NP), or the like; or may be a digital signal processor (DSP), an application specific integrated circuit (ASIC), a field-programmable gate array (FPGA), or other programmable logical devices, discrete gates, transistor logical devices, or discrete hardware components.

An embodiment of the present disclosure further provides a computer-readable storage medium. The storage medium stores a computer program, and when the computer program is executed by a processor, the vehicle sleep and wake-up method as described in any of the embodiments of the present disclosure is performed. The vehicle sleep and wake-up method is applied to an in-vehicle terminal, the in-vehicle terminal stores a work group configuration table sent by a cloud, and the method includes:
a work group request is received in response to triggering for a function scenario, where the work group request includes a work group identifier, an execution instruction, and a runtime;
a remaining duration of a target work group corresponding to the work group identifier is queried;
execution data are generated according to the execution instruction, the runtime, and the remaining duration;
a first target control unit is determined from the work group configuration table according to the work group identifier; and
the execution data are executed on the first target control unit.

Further, after the step that the execution data are executed on the first target control unit, the method further includes:
execution result information is generated; and
the execution result information is broadcast.

Further, the step that execution data are generated according to the execution instruction, the runtime, and the remaining duration includes:
the runtime and the remaining duration are combined to generate the execution data according to the execution instruction when the vehicle switches from a sleep state to a wake-up state, where the execution data are used for waking up the vehicle; and
working states corresponding to work groups of the vehicle are monitored and the work groups of the vehicle are controlled to sleep when the vehicle switches from the wake-up state to the sleep state.

Further, when the function scenario is a scenario of first entering a work group, the state corresponding to the execution instruction is an entry state, and the step that the runtime and the remaining duration are combined to generate the execution data according to the execution instruction includes:
whether the remaining duration is zero is determined in the entry state;
the runtime is set to the remaining duration to generate the execution data when the remaining duration is not zero; and
the runtime is set to the remaining duration and the first target control unit is waked up to generate the execution data when the remaining duration is zero.

Further, when the function scenario is a scenario of subsequently entering a work group, the state corresponding to the execution instruction is an entry state, and the step that the runtime and the remaining duration are combined to generate the execution data according to the execution instruction includes:
the runtime is superimposed on the remaining duration in the entry state to update the remaining duration; and the updated remaining duration is determined as the execution data.

Further, when the function scenario is a scenario of holding a work group, the state corresponding to the execution instruction is a hold state, and the step that the runtime and the remaining duration are combined to generate the execution data according to the execution instruction includes:
whether the remaining duration is zero is determined in the hold state;
execution suspension information is used as the execution data when the remaining duration is zero; and
the runtime is superimposed on the remaining duration to update the remaining duration when the remaining duration is not zero; and the updated remaining duration is determined as the execution data.

Further, when the function scenario is a function completion scenario, the state corresponding to the execution instruction is an exit state, the runtime is zero, and the step that the runtime and the remaining duration are combined to generate the execution data according to the execution instruction includes:
whether the remaining duration is greater than a preset time threshold is determined in the exit state;
the remaining duration is set to a duration corresponding to the preset time threshold and the updated remaining duration is determined as the execution data when the remaining duration is greater than the preset time threshold; and
the remaining duration is kept as the execution data when the remaining duration is not greater than the preset time threshold.

Further, the step that working states corresponding to work groups of the vehicle are monitored and the work groups of the vehicle are controlled to sleep includes:
a second target control unit corresponding to a work group is determined according to the work group configuration table when it is detected that the remaining duration of the work group is zero; and
whether there is a sleep conflict in the second target control unit is determined;
the second target control unit is put to sleep when there is no sleep conflict in the second target control unit;
first sleep result information is generated according to the sleep state of the second target control unit; and
the first sleep result information is broadcast.

Further, the step that working states corresponding to work groups of the vehicle are monitored and the work groups of the vehicle are controlled to sleep further includes:
a third target control unit is determined according to the work group configuration table when it is detected that the remaining durations of all the work groups are zero;
the third target control unit is preliminarily put to sleep, so that the vehicle enters shallow sleep;
second sleep result information is generated according to the sleep state of the third target control unit; and
the second sleep result information is broadcast.

Further, the step that working states corresponding to work groups of the vehicle are monitored and the work groups of the vehicle are controlled to sleep further includes:
a sleep time of the shallow sleep is detected; and
the third target control unit is put to deep sleep when the sleep time is greater than a preset sleep threshold, so that the vehicle enters full sleep.

Further, the cloud is configured to perform the following steps:
a work group creation instruction is received, where the work group creation instruction includes grouping conditions and function identifiers;
control units of the in-vehicle terminal are grouped according to the grouping conditions to obtain work groups;
the work groups are associated with the function identifiers to generate the work group configuration table; and
the work group configuration table is sent to the in-vehicle terminal.

Further, the cloud is further configured to perform the following steps:
a modification instruction for the control units of the in-vehicle terminal is received, where the modification instruction includes control unit modification parameters;
the work group configuration table is modified according to the control unit modification parameters to update the work group configuration table; and
the updated work group configuration table is sent to the in-vehicle terminal.

The embodiments in the specification are all described in a progressive manner. Each embodiment focuses on the differences from other embodiments, and the same or similar parts between the embodiments may be referred to each other.

Those skilled in the art should understand that the embodiments of the present disclosure may be provided as methods, apparatuses, or computer program products. Therefore, the embodiments of the present disclosure may be in a form of full hardware embodiments, full software embodiments, or embodiments combining software and hardware. In addition, the embodiments of the present disclosure may be in a form of a computer program product implemented on one or more computer available storage media (including but not limited to a disk memory, a CD-ROM, an optical memory, and the like) including computer available program codes.

The embodiments of the present disclosure are described with reference to the flowcharts and/or block diagrams of the methods, terminal devices (systems), and computer program products according to the embodiments of the present disclosure. It should be understood that computer program instructions may be used to implement each process and/or block in the flowcharts and/or block diagrams, or a combination of processes and/or blocks in the flowcharts and/or block diagrams. These computer program instructions may be provided for a general-purpose computer, a dedicated computer, an embedded processor, or a processor of any other programmable data processing terminal device to generate a machine, so that the instructions executed by a computer or a processor of any other programmable data processing terminal device generate an apparatus for implementing a specific function in one or more processes in the flowcharts and/or in one or more blocks in the block diagrams.

These computer program instructions may be stored in a computer-readable memory that can instruct the computer or any other programmable data processing terminal device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or other programmable data processing terminal device, so that a series of operations and steps are performed on the computer or the other programmable terminal device, thereby generating computer-implemented processing. Therefore, the instructions executed on the computer or the other programmable terminal device provide steps for implementing a specific function in one or more processes in the flowcharts and/or in one or more blocks in the block diagrams.

The above embodiments are only preferred embodiments to fully illustrate the present disclosure, and the scope of protection of the present disclosure is not limited thereto. Equivalent substitutions or transformations made by those skilled in the art on the basis of the present disclosure fall within the scope of protection of the present disclosure.

## Claims

1. A vehicle sleep and wake-up method, applied to an in-vehicle terminal, wherein the in-vehicle terminal stores a work group configuration table sent by a cloud, and the method comprises:
receiving a work group request in response to triggering for a function scenario, wherein the work group request comprises a work group identifier, an execution instruction, and a runtime;
querying a remaining duration of a target work group corresponding to the work group identifier;
generating execution data according to the execution instruction, the runtime, and the remaining duration;
determining a first target control unit from the work group configuration table according to the work group identifier; and
executing the execution data on the first target control unit.

2. The method according to claim 1, wherein after the step of executing the execution data on the first target control unit, the method further comprises:
generating execution result information; and
broadcasting the execution result information.

3. The method according to claim 1, wherein the step of generating execution data according to the execution instruction, the runtime, and the remaining duration comprises:
combining the runtime and the remaining duration to generate the execution data according to the execution instruction when the vehicle switches from a sleep state to a wake-up state, wherein the execution data are used for waking up the vehicle; and
monitoring working states corresponding to work groups of the vehicle and controlling the work groups of the vehicle to sleep when the vehicle switches from the wake-up state to the sleep state.

4. The method according to claim 3, wherein when the function scenario is a scenario of first entering a work group, the state corresponding to the execution instruction is an entry state, and the step of combining the runtime and the remaining duration to generate the execution data according to the execution instruction comprises:
determining, in the entry state, whether the remaining duration is zero;
setting the runtime to the remaining duration to generate the execution data when the remaining duration is not zero; and
setting the runtime to the remaining duration and waking up the first target control unit to generate the execution data when the remaining duration is zero.

5. The method according to claim 3, wherein when the function scenario is a scenario of subsequently entering a work group, the state corresponding to the execution instruction is an entry state, and the step of combining the runtime and the remaining duration to generate the execution data according to the execution instruction comprises: superimposing the runtime on the remaining duration in the entry state to update the remaining duration; and determining the updated remaining duration as the execution data.

6. The method according to claim 3, wherein when the function scenario is a scenario of holding a work group, the state corresponding to the execution instruction is a hold state, and the step of combining the runtime and the remaining duration to generate the execution data according to the execution instruction comprises:
determining, in the hold state, whether the remaining duration is zero;
using execution suspension information as the execution data when the remaining duration is zero; and
superimposing the runtime on the remaining duration to update the remaining duration when the remaining duration is not zero; and determining the updated remaining duration as the execution data.

7. The method according to claim 3, wherein when the function scenario is a function completion scenario, the state corresponding to the execution instruction is an exit state, the runtime is zero, and the step of combining the runtime and the remaining duration to generate the execution data according to the execution instruction comprises:
determining, in the exit state, whether the remaining duration is greater than a preset time threshold;
setting the remaining duration to a duration corresponding to the preset time threshold and determining the updated remaining duration as the execution data when the remaining duration is greater than the preset time threshold; and
keeping the remaining duration as the execution data when the remaining duration is not greater than the preset time threshold.

8. The method according to claim 3, wherein the step of monitoring working states corresponding to work groups of the vehicle and controlling the work groups of the vehicle to sleep comprises:
determining a second target control unit corresponding to a work group according to the work group configuration table when it is detected that the remaining duration of the work group is zero;
determining whether there is a sleep conflict in the second target control unit;
putting the second target control unit to sleep when there is no sleep conflict in the second target control unit;
generating first sleep result information according to the sleep state of the second target control unit; and
broadcasting the first sleep result information.

9. The method according to claim 8, wherein the step of monitoring working states corresponding to work groups of the vehicle and controlling the work groups of the vehicle to sleep further comprises:
determining a third target control unit according to the work group configuration table when it is detected that the remaining durations of all the work groups are zero;
preliminarily putting the third target control unit to sleep, so that the vehicle enters shallow sleep;
generating second sleep result information according to the sleep state of the third target control unit; and
broadcasting the second sleep result information.

10. The method according to claim 9, wherein the step of monitoring working states corresponding to work groups of the vehicle and controlling the work groups of the vehicle to sleep further comprises:
detecting a sleep time of the shallow sleep; and
putting the third target control unit to deep sleep when the sleep time is greater than a preset sleep threshold, so that the vehicle enters full sleep.

11. The method according to claim 1, wherein the cloud is configured to perform the following steps:
receiving a work group creation instruction, wherein the work group creation instruction comprises grouping conditions and function identifiers;
grouping control units of the in-vehicle terminal according to the grouping conditions to obtain work groups;
associating the work groups with the function identifiers to generate the work group configuration table; and
sending the work group configuration table to the in-vehicle terminal.

12. The method according to claim 11, wherein the cloud is further configured to perform the following steps:
receiving a modification instruction for the control units of the in-vehicle terminal, wherein the modification instruction comprises control unit modification parameters;
modifying the work group configuration table according to the control unit modification parameters to update the work group configuration table; and
sending the updated work group configuration table to the in-vehicle terminal.

13. A vehicle sleep and wake-up apparatus, applied to an in-vehicle terminal, wherein the in-vehicle terminal stores a work group configuration table sent by a cloud, and the apparatus comprises:
a response module, configured to receive a work group request in response to triggering for a function scenario, wherein the work group request comprises a work group identifier, an execution instruction, and a runtime;
a query module, configured to query a remaining duration of a target work group corresponding to the work group identifier;
an execution data generation module, configured to generate execution data according to the execution instruction, the runtime, and the remaining duration;
a first target control unit determination module, configured to determine a first target control unit from the work group configuration table according to the work group identifier; and
an execution module, configured to execute the execution data on the first target control unit.

14. A vehicle, comprising a processor, a memory, and a computer program stored in the memory and executable on the processor, wherein the computer program, when executed by the processor, implements the steps of the vehicle sleep and wake-up method according to any one of claims 1 to 12.

15. A computer-readable storage medium, wherein the computer-readable storage medium stores a computer program which, when executed by a processor, implements the steps of the vehicle sleep and wake-up method according to any one of claims 1 to 12.
